# EUROPÄISCHE PATENTSCHRIFT

(11) **EP 1 347 210 B1**
(45) Veröffentlichungstag und Bekanntmachung des Hinweises auf die Patenterteilung: **06.10.2004**
(21) Anmeldenummer: 03005678.2
(22) Anmeldetag: 13.03.2003
(51) Int. Cl.: F16H 41/24, B60K 17/02

(54) **Schraubverbindung zwischen einem drehmomentübertragenden Koppelelement und einer Gehäuseschale einer Aggregatekomponente eines Antriebsaggregates eines Fahrzeuges**
Threaded connection between a torque transmitting coupling element and a shell of a component of a vehicle driving means
Assemblage vissé entre un élément à transmission de couple et une coque d'un aggregat d'un groupe d'entraînement d'un véhicule

(30) Priorität: 19.03.2002 DE 10212033
(43) Veröffentlichungstag der Anmeldung: 24.09.2003
(73) Patentinhaber: DaimlerChrysler AG, 70567 Stuttgart (DE)
(72) Erfinder: Buck, Walter, 71638 Ludwigsburg (DE); Rau, Erhard, 73235 Weilheim (DE); Engels, Hartmut, 72649 Wolfschlugen (DE); Hellwig, Hartwig, 70329 Stuttgart (DE); Jentschke, Mark, 73655 Plüderhausen (DE); Kurtzer, Gernot, 73230 Kirchheim unter Teck (DE)

(56) Entgegenhaltungen:
- EP-A- 0 749 861
- DE-A- 19 501 494
- DE-A- 19 906 677
- US-A- 5 616 002

## Beschreibung

Die Erfindung betrifft eine Schraubverbindung zwischen einem drehmomentübertragenden Koppelelement und einer Gehäuseschale einer Aggregatekomponente eines Antriebsaggregates eines Fahrzeuges nach dem Oberbegriff von Patentanspruch 1.

Aus der DE 198 57 232 C1 sind Schraubverbindungen der eingangs genannten Art zwischen einem drehmomentübertragenden Koppelelement in Form einer Mitnehmerscheibe aus Blech konstanter Dicke und einer Gehäuseschale eines hydrodynamischen Drehmomentwandlers bekannt. Die Mitnehmerscheibe ist mittig an einem Kurbelwellenende eines Antriebsmotors angeflanscht, wobei ein vom Antriebsmotor in die Mitnehmerscheibe eingeleitetes Drehmoment von mindestens drei radial außen an mindestens drei gleichmäßig am Umfang verteilten Krafteinleitungsstellen in Form einer jeweiligen gattungsgemäßen Schraubverbindung auf den Drehmomentwandler eines Kraftfahrzeuggetriebes übertragbar ist. Die Mitnehmerscheibe weist drei ebenfalls gleichmäßig am Umfang verteilte Öffnungen auf, die durch eine Umrandung begrenzt sind. Diese Mitnehmerscheibe ist dahingehend verbessert, dass trotz erhöhter Anforderungen an deren Drehmomentübertragungsfähigkeit das übertragene Drehmoment gemessen werden kann. Zu diesem Zweck ist die Mitnehmerscheibe so ausgestaltet, dass ein Drehmomentsensor in einer der drei Öffnungen der Mitnehmerscheibe angeordnet ist, und dass die die drei Krafteinleitungsstellen bildenden Schraubverbindungen umfangsmäßig jeweils zwischen zwei Öffnungen angeordnet sind, und dass die Umrandungen, die die Öffnungen radial nach innen begrenzen, als konkave Radien ausgestaltet sind, deren Größe radial nach außen abnimmt, und dass die kleinsten konkaven Radien Radienansätze aufweisen, die radial außerhalb der Krafteinleitungsstellen liegen, und dass umfangsmäßig zwischen den Öffnungen jeweils Sicken angeordnet sind. Bei dieser bekannten Mitnehmerscheibe liegt die geometrische Bezugsachse von Außen- und Innengewinde der jeweils eine Krafteinleitungsstelle bildenden gattungsgemäßen Schraubverbindung parallel zu der mit den Drehachsen von Kurbelwelle und Drehmomentwandler zusammenfallenden Zentralachse des Antriebsaggregates.
Die auch ein paralleles Ansetzen des Schraubwerkzeuges erfordernde Parallelanordnung von Bezugs- und Zentralachse führt wie im Falle der üblicher Weise noch relativ zu einem Anlasserzahnkranz und einem gelochten Inkrementzylinder als Geberelement für einen die Kurbelwellendrehwinkelstellung abtastenden Sensor bewegungsfest angeordneten bekannten Mitnehmerscheibe auch bei all denjenigen Antriebsaggregaten zu Montageschwierigkeiten, bei denen das Motor- bzw. Kurbelwellengehäuse an seiner Außenseite mit einer Mehrzahl von Steuer- bzw. Hilfsaggregaten wie elektrischer Anlassmotor, Drehzahlsensor und dgl. - bestückt ist und infolgedessen, wenn überhaupt, nur an seiner Unterseite im Bereich des hinteren Kurbelwellenendes mit einer das Ansetzen des. Schraubwerkzeuges ermöglichenden Gehäuseeinbuchtung bzw. -öffnung versehen sein kann, deren Zugänglichkeit aufgrund dieser Lage bei der Endmontage des Antriebsaggregates, also nach dem axialen Zusammenführen der Aggregatekomponenten Antriebsmotor und Getriebe, naturgemäß erschwert ist. Überdies verringert diese Gehäuseeinbuchtung das nutzbare Ölvolumen der üblicher Weise an die Unterseite des Kurbelwellengehäuses angesetzten Ölwanne.

Die der Erfindung zugrunde liegende Aufgabe ist im Wesentlichen darin zu sehen, eine Schraubverbindung der eingangs genannten Art so zu verbessern, dass die im Zusammenhang mit der bekannten Mitnehmerscheibe aufgezeigten Nachteile vermieden sind.

Die erläuterte Aufgabe ist gemäß der Erfindung mit den Merkmalen von Patentanspruch 1 in vorteilhafter Weise gelöst.

Bei der Schraubverbindung nach der Erfindung kann das Schraubwerkzeug bei der Endmontage des Antriebsaggregates schräg zur Zentralachse, d.h. also in erleichterter Weise in Arbeitsstellung gebracht werden, und es ist infolge der geneigten Lage der Bezugsachse zur Zentralachse nicht mehr erforderlich, für das Ansetzen des Schraubwerkzeuges am Kurbelwellengehäuse eine besondere Gehäuseeinbuchtung vorzusehen, so dass die Ölwanne bei gleichem Volumen flacher ausgelegt werden kann.

Bei der Schraubverbindung nach der Erfindung kann gemäß einer ergonomisch vorteilhaften Ausführungsform nach den Merkmalen von Patentanspruch 2 die Kopfschraube in einfacher Weise radial nach innen relativ zur Zentralachse eingeschraubt werden.

Insbesondere für diejenigen Anwendungsfälle, bei denen das Koppelelement in Form einer Mitnehmerscheibe zur unmittelbaren drehfesten Verbindung der Kurbelwelle mit einem hydrodynamischen Drehmomentwandler verwendet ist, enthalten die Merkmale der Patentansprüche 3 bis 10 vorteilhafte Ausgestaltungsmöglichkeiten der Schraubverbindung nach der Erfindung.

Während es sich bei den vorgenannten Anwendungsfällen als vorteilhaft erwiesen hat, dass gemäß den Merkmalen von Patentanspruch 4 der das Innengewinde aufweisende Verbindungsteil dem Koppelelement zugeordnet ist, ergeben sich bei anders gelagerten Anwendungsfällen, insbesondere wenn eine je nach Betriebszustand des Antriebsmotors als Anlassmotor oder als Generator arbeitende elektrische Maschine mit dem Antriebsmotor in drehmomentübertragender Verbindung steht und baulich sowohl konzentrisch zur Zentralachse als auch axial zwischen Antriebsmotor und Drehmomentwandler angeordnet ist, Vorteile insbesondere dadurch, dass der das Innengewinde aufweisende Verbindungsteil gemäß den Merkmalen von Patentanspruch 11 der Gehäuseschale zugeordnet ist, welche fester Bestandteil der Außenschale des Drehmomentwandlers nach den Merkmalen von Patentanspruch 16 oder des Rotors der elektrischen Maschine nach den Merkmalen von Patentanspruch 19 sein kann.

Bei Verwendung einer als Anlassmotor oder Generator arbeitenden elektrischen Maschine haben die weiteren Patentansprüche 12 bis 15, 17 u.18 vorteilhafte Ausgestaltungsmöglichkeiten der Schraubverbindung nach der Erfindung zum Gegenstand.

Die Erfindung ist nachstehend anhand von drei in der Zeichnung mehr oder weniger schematisch dargestellten Ausführungsformen näher beschrieben. In der Zeichnung bedeuten:
- Figur 1: einen axialen Teilschnitt durch ein erstes Antriebsaggregat eines Fahrzeuges in einer eine Zentralachse enthaltenden Ebene mit Schraubverbindungen nach der Erfindung in einer ersten Ausführungsform,
- Figur 2: einen Ausschnitt der Figur 1 in vergrößertem Maßstab mit einer Schraubverbindung nach der Erfindung in der ersten Ausführungsform,
- Figur 3: das Koppelelement in Form einer Mitnehmerscheibe des Antriebsaggregates von Figur 1 in Einzeldarstellung (Axialschnitt) und vergrößertem Maßstab,
- Figur 4: einen axialen Teilschnitt durch ein zweites Antriebsaggregat eines Fahrzeuges in einer eine Zentralachse enthaltenden Ebene mit Schraubverbindungen nach der Erfindung in einer zweiten Ausführungsform, und
- Figur 5: einen axialen Teilschnitt durch ein drittes Antriebsaggregat eines Fahrzeuges in einer eine Zentralachse enthaltenden Ebene mit Schraubverbindungen nach der Erfindung in einer dritten Ausführungsform.

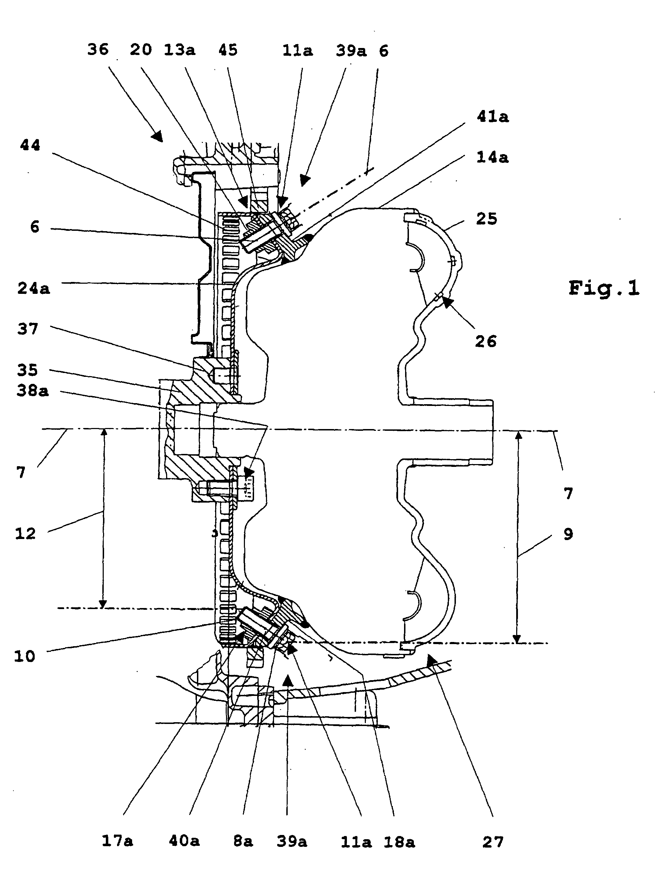

Bei dem ersten Antriebsaggregat der Figuren 1 bis 3 ist das hintere, abtriebsseitige Wellenende einer Kurbelwelle 35 eines Antriebsmotors 36 als Flansch 37 ausgebildet, an welchen der Innenrand eines drehmomentübertragenden Koppelelementes 13a durch Schrauben 38a bewegungsfest angeflanscht ist. Das Koppelelement 13a ist in Form einer im Wesentlichen rotationssymmetrisch und als Blechpressteil konstanter Dicke ausgebildeten Mitnehmerscheibe 24a ausgebildet, welche im Bereich ihres Außenumfanges durch drei in Umfangsrichtung gleichmäßig verteilt angeordnete Schraubverbindungen nach der Erfindung in einer ersten Ausführungsform 39a mit einer Gehäuseschale 14a eines hydrodynamischen Drehmomentwandlers 27 bewegungsfest verbunden ist, wobei die Drehachsen der Kurbelwelle 35 und des Drehmomentwandlers 27 mit einer geometrischen Zentralachse 7-7 des Antriebsaggregates zusammenfallen.
In Bezug auf die Zentralachse 7-7 ist eine radial außerhalb des Kraftflusses zwischen den radial innen angeordneten Schrauben 38a am Kurbelwellenflansch 37 und den radial außen angeordneten Schraubverbindungen 39a liegende gelochte Inkrementhülse 44 koaxial und einteilig zur Mitnehmerscheibe 24a ausgebildet, welche als Geberelement für die Drehwinkelstellungen der Kurbelwelle 35 mit einem nicht mehr dargestellten Sensor zusammenarbeitet.
In dem zwischen den Schraubverbindungen 39a und der Inkrementhülse 44 liegenden Übergangsbereich der Mitnehmerscheibe 24a ist ein Anlasserzahnkranz 45 konzentrisch zur Zentralachse 7-7 angeordnet und mit der Mitnehmerscheibe 24a durch Schweißen starr verbunden.

Die Gehäuseschale 14a ist koaxial sowie druck- und bewegungsfest zu einer Außenschale 25 eines Pumpenrades 26 des Drehmomentwandlers 27 angeordnet, so dass diese schalenförmigen Gehäuseteile eine in Bezug auf den hydrodynamischen Arbeitskreislauf nach außen im Wesentlichen abgeschlossene drehbewegliche Wandlerglocke des Drehmomentwandlers 27 bilden.

Für die Schraubverbindung 39a sind charakteristisch
- eine zur Zentralachse 7-7 geneigt ausgerichtete geometrische Bezugsachse 6-6, welche gegenüber der Gehäuseschale 14a lageunveränderlich festgelegt ist,
- ein ein zylindrisches Innengewinde 16 aufweisendes Verbindungsteil 17a, das dem Koppelelement 13a bewegungsfest zugeordnet ist, und dessen Innengewinde 16 mit der Bezugsachse 6-6 fluchtet,
- eine mit ihrem korrepondierenden Außengewinde 15 in das Innengewinde 16 eingeschraubte Kopfschraube 11a mit einem Schraubenkopf 8a, und
- ein einen zentrisch zur Bezugsebene 6-6 angeordneten Schraubendurchgang 40a für die Kopfschraube 11a aufweisendes Verbindungsteil 18a, das der Gehäuseschale 14a bewegungsfest zugeordnet ist und eine sich konzentrisch an den Schraubendurchgang 40a anschließende Anlagefläche 41a für den Schraubenkopf 8a aufweist.

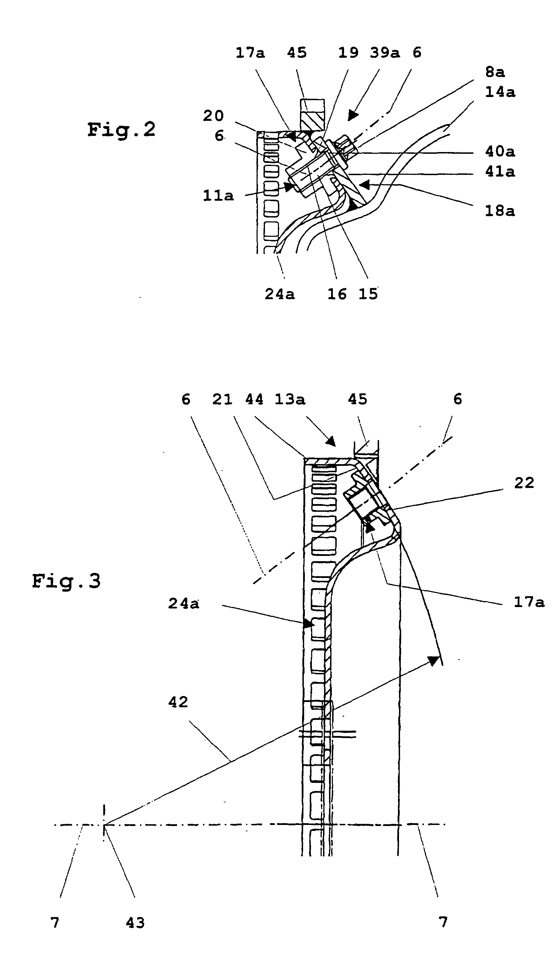

In dem in den Figuren 1,2 dargestellten Montageendzustand sind bei fest angezogener Kopfschraube 11a die beiden Verbindungsteile 17a und 18a unter Anpressung des Schraubenkopfes 8a gegen die Anlagefläche 41a bewegungsfest gegeneinander verspannt.
Bei der Schraubverbindung 39a sind Koppelelement 13a und zugeordnetes Verbindungsteil 17a als an sich getrennte Bauteile ausgebildet sowie durch eine Nietverbindung 19 miteinander verbunden. Das Verbindungsteil 17a ist nach Art einer Gewindemutter 20 ausgebildet.
Bei der Schraubverbindung 39a ist der Schraubenkopf 8a gegenüber dem entgegengesetzten Schraubenende 10 der Kopfschraube 11a in der von dem Koppelelement 13a auf die Gehäuseschale 14a des Drehmomentwandlers 27 weisenden Richtung der Zentralachse 7-7 versetzt, so dass das Ansetzen des Schraubwerkzeuges aus Richtung des sich an das Motorgehäuse anschließenden Getriebe- bzw. Wandlergehäuses erfolgen kann.
Bei der Schraubverbindung 39a ist der Abstand 9 des Schraubenkopfes 8a zur Zentralachse 7-7 größer als der Abstand 12 des entgegengesetzten Schraubenendes 10 der Kopfschraube 11a zur Zentralachse 7-7 ausgelegt, wodurch u.a. erreicht ist, dass der für die Schraubverbindung benötigte Bauraum klein gehalten ist.
Bei der Schraubverbindung 39a weisen Koppelelement 13a und zugeordnetes Verbindungsteil 17a - wenn diese als an sich getrennte Bauteile ausgebildet sowie danach bewegungsfest miteinander verbunden sind - einander gegenüberliegende korrespondierende Anlageflächen 21 und 22 auf, von denen wenigstens die eine ballig ausgebildet ist - d.h. einen Kugelradius 42 mit einem auf oder in Nähe der Zentralachse 7-7 liegenden Einsatzpunkt 43 aufweist, so dass eine verliersichere Positionierung des Verbindungsteiles 17a am Koppelelement 13a beim Verbinden dieser beiden Teile erleichtert ist.
Bei der Schraubverbindung 39a kann anstelle der Nietverbindung 19 eine Schweißverbindung vorgesehen sein.
Bei der Schraubverbindung 39a können Koppelelement 13a und zugeordnetes Verbindungsteil 17a als ein einteiliges Blechpressteil ausgebildet sein.

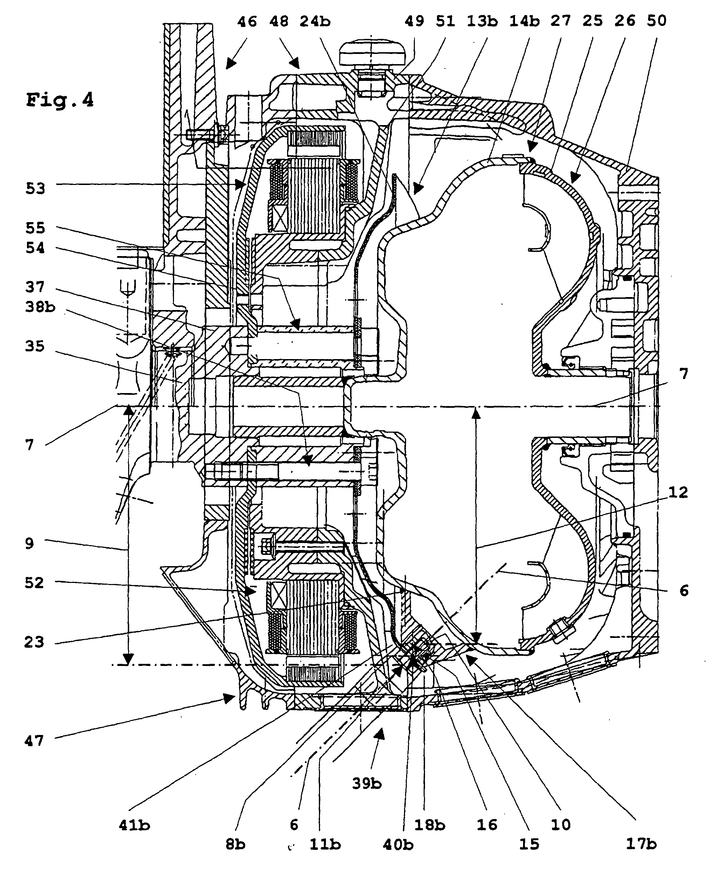

Das zweite Antriebsaggregat der Figur 4 weist einen Antriebsmotor 46 mit einem Motor(Kurbelwellen)gehäuse 47 auf, an welches ein Zwischengehäuse 49 einer elektrischen Maschine 48 bewegungsfest angeflanscht ist, wobei, an dieses Zwischengehäuse 49 wiederum ein einen hydrodynamischen Drehmomentwandler 27 aufnehmendes Wandlergehäuse 50 bewegungsfest angesetzt ist. Die Drehachsen der Kurbelwelle 35 des Antriebsmotors 46 und des Drehmomentwandlers 27 fallen mit einer geometrischen Zentralachse 7-7 des Antriebsaggregates zusammen. Das Zwischengehäuse 49 der je nach Betriebszustand des Antriebsmotors 46 als Anlassmotor oder Generator arbeitenden elektrischen Maschine 48 weist eine ringförmige, sich in Bezug auf die Zentralachse 7-7 radial nach innen erstreckende Gehäusewand 51 auf, die an ihrem inneren Ende einen konzentrisch zur Zentralachse 7-7 angeordneten ringförmigen Stator 52 bewegungsfest haltert, welcher von einem korrespondierenden ringförmigen Rotor 53 übergriffen wird. Der Rotor 53 ist an seinem Innenumfang mit einer zentrischen Antriebsscheibe 54 einteilig ausgebildet, welche an dem abtriebsseitigen Kurbelwellenflansch 37 der Kurbelwelle 35 bewegungsfest eingespannt ist. Der Drehmomentwandler 27 weist an seinen Stirnseiten eine Gehäuseschale 14b und eine zu letzterer koaxial und druckfest angeordnete Außenschale 25 eines Pumpenrades 26 auf, wobei diese schalenförmigen Gehäuseteile in der üblichen Weise eine in Bezug auf den inneren hydrodynamischen Arbeitskreislauf nach außen geschlossene Wandlerglocke bilden.
Der Drehmomentwandler 27 steht mit der Kurbelwelle 35 über ein drehmomentübertragendes Koppelelement 13b in Antriebsverbindung, das räumlich zwischen der Gehäusewand 51 des Zwischengehäuses 49 und der Gehäuseschale 14b des Drehmomentwandlers 27 angeordnet und in Form einer Mitnehmerscheibe 24b ausgebildet ist, die ihrerseits aus einem komplexen Blechpressteil besteht. Die Mitnehmerscheibe 24b ist an ihrem Innenumfang durch Schrauben 38b unter Einfügen einer zur Zentralachse 7-7 zentrischen Distanzscheibe 55 am Kurbelwellenflansch 37 fest eingespannt, wobei zwischen Kurbelwellenflansch 37 und Distanzscheibe 55 noch die Antriebsscheibe 54 des Rotors 53 fest eingeklemmt ist.
Die Mitnehmerscheibe 24b ist im Bereich ihres Außenumfanges durch mehrere in Umfangsrichtung gleichmäßig verteilt angeordnete Schraubverbindungen 39b nach der Erfindung in der zweiten Ausführungsform mit der Gehäuseschale 14b des Drehmomentwandlers 27 bewegungsfest verbunden.

Für eine jeweilige Schraubverbindung 39b sind charakteristisch
- eine zur Zentralachse 7-7 geneigt ausgerichtete geometrische Bezugsachse 6-6, welche gegenüber der Gehäuseschale 14b lageunveränderlich festgelegt ist,
- ein ein zylindrisches Innengewinde 16 aufweisendes Verbindungsteil 17b, das der Gehäuseschale 14b bewegungsfest zugeordnet ist, und dessen Innengewinde 16 mit der Bezugsachse 6-6 fluchtet,
- eine mit ihrem korrepondierenden Außengewinde 15 in das Innengewinde 16 eingeschraubte Kopfschraube 11b mit einem Schraubenkopf 8b, und
- ein einen zentrisch zur Bezugsebene 6-6 angeordneten Schraubendurchgang 40b für die Kopfschraube 11b aufweisendes Verbindungsteil 18b, das dem Koppelelement 13b bewegungsfest zugeordnet und eine sich konzentrisch an den Schraubendurchgang 40b anschließende Anlagefläche 41b für den Schraubenkopf 8b aufweist.

In dem in Figur 4 dargestellten Montageendzustand sind bei fest angezogener Kopfschraube 11b die beiden Verbindungsteile 17b und 18b unter Anpressung des Schraubenkopfes 8b gegen die Anlagefläche 41b bewegungsfest gegeneinander verspannt.
Bei der Schraubverbindung 39b sind das Verbindungsteil 18b und der Außenrand der Mitnehmerscheibe 24b einteilig ausgebildet.
Bei der Schraubverbindung 39b sind Gehäuseschale 14b und zugeordnetes Verbindungsteil 17b als an sich getrennte Bauteile ausgebildet sowie durch Schweißverbindungen 23 bewegungsfest zueinander angeordnet.
Bei der Schraubverbindung 39b ist der Schraubenkopf 8b gegenüber dem entgegengesetzten Schraubenende 10 der Kopfschraube 11b in der von der Gehäuseschale 14b des Drehmomentwandlers 27 auf das Koppelelement 13b weisenden Richtung der Zentralachse 7-7 versetzt, so dass das Ansetzen des Schraubwerkzeuges über eine Öffnung des sich an das Wandlergehäuse 50 anschließenden Zwischengehäuses 49 erfolgen kann.
Bei der Schraubverbindung 39b ist der Abstand 9 des Schraubenkopfes 8b zur Zentralachse 7-7 größer als der Abstand 12 des entgegengesetzten Schraubenendes 10 der Kopfschraube 11b zur Zentralachse 7-7 ausgelegt, wodurch u.a. erreicht ist, dass der für die Schraubverbindung benötigte Bauraum klein gehalten ist.

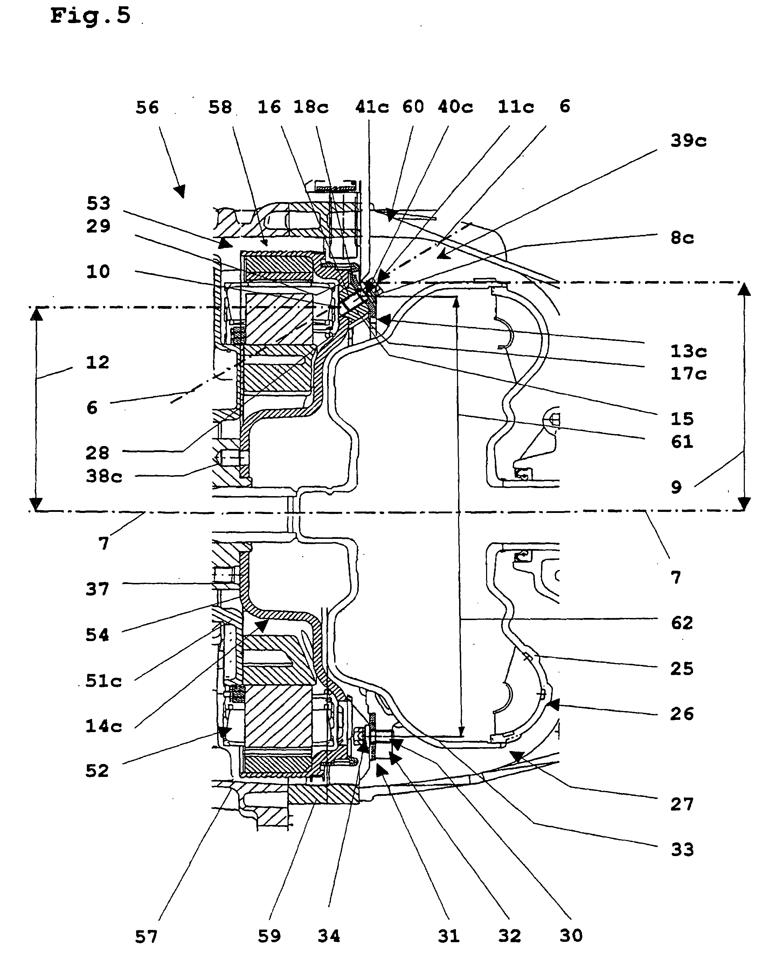

Das dritte Antriebsaggregat der Figur 5 weist einen Antriebsmotor 56 mit einem Motor(Kurbelwellen)gehäuse 57 auf, an welches ein Zwischengehäuse 59 einer elektrischen Maschine 58 bewegungsfest angeflanscht ist, wobei an dieses Zwischengehäuse 59 wiederum ein einen hydrodynamischen Drehmomentwandler 27 aufnehmendes Wandlergehäuse 60 bewegungsfest angesetzt ist. Die Drehachsen der mit einem abtriebsseitigen Kurbelwellenflansch 37 versehenen Kurbelwelle des Antriebsmotors 56 und des Drehmomentwandlers 27 fallen mit einer geometrischen Zentralachse 7-7 des Antriebsaggregates zusammen. Das Zwischengehäuse 59 der je nach Betriebszustand des Antriebsmotors 56 als Anlassmotor oder Generator arbeitenden elektrischen Maschine 58 ist bewegungsfest gegenüber einem sich in Bezug auf die Zentralachse 7-7 radial nach innen erstreckenden Zwischenflansch 51c, an welchem ein konzentrisch zur Zentralachse 7-7 angeordneter ringförmiger Stator 52 bewegungsfest gehaltert ist, der von einem korrespondierenden ringförmigen Rotor 53 übergriffen wird. Der Rotor 53 ist an seinem Innenumfang mit einer zentrischen Antriebsscheibe oder Nabe 54 einteilig ausgebildet, welche an dem Kurbelwellenflansch 37 der Kurbelwelle durch lediglich angedeutete Schrauben 38c bewegungsfest eingespannt ist. Der Drehmomentwandler 27 weist an seinen Stirnseiten eine Gehäuseschale 33 und eine zu letzterer koaxial und druckfest angeordnete Außenschale 25 eines Pumpenrades 26 auf, wobei diese schalenförmigen Gehäuseteile in der üblichen
Weise eine in Bezug auf den inneren hydrodynamischen Arbeitskreislauf nach außen geschlossene Wandlerglocke bilden.
Der Drehmomentwandler 27 dieses dritten Antriebsaggregates steht mit dem Kurbelwellenflansch 37 über ein drehmomentübertragendes Koppelelement 13c in Antriebsverbindung, das in Form eines zur Zentralachse 7-7 konzentrisch angeordneten Ringes als Blechpressteil ausgebildet ist. Das Koppelelement 13c ist im Bereich des Außenumfanges des Drehmomentwandlers 27 durch mehrere in Umfangsrichtung gleichmäßig verteilt angeordnete Schraubbefestigungen 30 mit der Gehäuseschale 33 des Drehmomentwandlers 27 bewegungsfest verbunden. Zu diesem Zweck sind dem Koppelelement 13c und der Gehäuseschale 33 je ein radial zur Zentralachse 7-7 sich erstreckendes Befestigungsteil 31 bzw.32 bewegungsfest zugeordnet, welche durch parallel zur Zentralachse 7-7 ausgerichtete Befestigungsschrauben 34 starr gegeneinander verspannt sind.
Das Koppelelement 13c ist durch Schraubverbindungen 39c nach der Erfindung in der dritten Ausführungsform mit einer Gehäuseschale 14c bewegungsfest verbunden, welche einen einteiligen mittleren Abschnitt des Rotors 53 bildet und den Stator 52 gehäuseartig umschließt. Die Schraubverbindungen 39c sind gegenüber den Schraubbefestigungen 30 in Bezug auf die Zentralachse 7-7 jeweils in Umfangsrichtung versetzt angeordnet.

Für eine jeweilige Schraubverbindung 39c sind charakteristisch
- eine zur Zentralachse 7-7 geneigt ausgerichtete geometrische Bezugsachse 6-6, welche gegenüber der Gehäuseschale 14c lageunveränderlich festgelegt ist,
- ein ein zylindrisches Innengewinde 16 aufweisendes Verbindungsteil 17c, das der Gehäuseschale 14c bewegungsfest zugeordnet ist, und dessen Innengewinde 16 mit der Bezugsachse 6-6 fluchtet,
- eine mit ihrem korrepondierenden Außengewinde 15 in das Innengewinde 16 eingeschraubte Kopfschraube 11c mit einem Schraubenkopf 8c, und
- ein einen zentrisch zur Bezugsebene 6-6 angeordneten Schraubendurchgang 40c für die Kopfschraube 11c aufweisendes Verbindungsteil 18c, das dem Koppelelement 13c bewegungsfest zugeordnet ist sowie eine sich konzentrisch an den Schraubendurchgang 40c anschließende Anlagefläche 41c für den Schraubenkopf 8c aufweist.

In dem in Figur 5 dargestellten Montageendzustand sind bei fest angezogener Kopfschraube 11c die beiden Verbindungsteile 17c und 18c unter Anpressung des Schraubenkopfes 8c gegen die Anlagefläche 41c bewegungsfest gegeneinander verspannt.

Bei der Schraubverbindung 39c bilden Gehäuseschale 14c und zugeordnetes Verbindungsteil 17c an sich getrennte Bauteile. Das Verbindungsteil 17c wird durch einen Gehäuseeinsatz 28 dargestellt, welcher in eine korrespondierende Gehäuseöffnung 29 der Gehäuseschale 14c formschlüssig eingesetzt und mit dieser Gehäuseschale 14c verschweißt ist.
Bei der Schraubverbindung 39c ist der dem Koppelelement 13c zugeordnete Verbindungsteil 18c mit dem Koppelelement 13c einteilig ausgebildet.
Bei der Schraubverbindung 39c ist der Schraubenkopf 8c gegenüber dem entgegengesetzten Schraubenende 10 der Kopfschraube 11c in der von der Gehäuseschale 14c des Rotors 53 auf das Koppelelement 13c weisenden Richtung der Zentralachse 7-7 versetzt, so dass das Ansetzen des Schraubwerkzeuges. über eine Öffnung des sich in dieser Richtung an das Zwischengehäuse 59 anschließenden Wandlergehäuses 60 erfolgen kann.
Bei der Schraubverbindung 39c ist der Abstand 9 des Schraubenkopfes 8c zur Zentralachse 7-7 größer als der Abstand 12 des entgegengesetzten Schraubenendes 10 der Kopfschraube 11c zur Zentralachse 7-7 ausgelegt, wodurch u.a. erreicht ist, dass der für die Schraubverbindung benötigte Bauraum klein gehalten ist.
Bei der Schraubverbindung 39c ist ihr mittlerer Abstand 61 zur Zentralachse 7-7 etwa gleich dem Außenradius des Drehmomentwandlers 27.
Bei dem dritten Antriebsaggregat der Figur 5 ist der Abstand 62 der Schraubbefestigungen 30 zwischen dem Koppelelement 13c und der Gehäuseschale 33 des Drehmomentwandlers 27 zur Zentralachse 7-7 etwa gleich dem Außenradius des Drehmomentwandlers 27.
Von der Belastung her ist es günstig, dass die Abstände 61 und 62 etwa gleich groß sind.
Um hohe Drehmomente übertragen zu können, sind die Abstände 61 und 62 sehr groß gehalten.

## Patentansprüche

1. Schraubverbindung zwischen einem drehmomentübertragenden Koppelelement (13a; 13b; 13c) und einer Gehäuseschale (14a; 14b; 14c) einer Aggregatekomponente eines Antriebsaggregates (36) eines Fahrzeuges, bei der Koppelelement und Gehäuseschale rotationssymmetrisch ausgebildet sowie drehbar und in Bezug auf ihre Mittelachse koaxial zu einer geometrischen Zentralachse (7-7) des Antriebsaggregates (36) angeordnet sind, mit einer ein Außengewinde (15) aufweisenden Kopfschraube, (11a; 11b; 11c) einem ein korrespondierendes Innengewinde (16) aufweisenden Verbindungsteil (17a; 17b; 17c) und einem einen Schraubendurchgang (40a) mit einer konzentrisch sich anschließenden Anlagefläche (41a) aufweisenden Verbindungsteil, (18a; 18b; 18c) und bei der das eine Verbindungsteil (17a; 18b; 18c) dem Koppelelement (13a; 13b; 13c) und das andere Verbindungsteil (18a;17b;17c) der Gehäuseschale (14a;14b;14c) jeweils bewegungsfest zugeordnet sowie im Montageendzustand sowohl die beiden Verbindungsteile (17a , 18a; 17b, 17c) unter Anpressung des Schraubenkopfes (8a;8b;8c) direkt oder mittelbar an der Anlagefläche (41a) bewegungsfest gegeneinander verspannt sind als auch die Gewindeachsen von Außen- und Innengewinde (15, 16) mit einer geometrischen Bezugsachse (6-6) fluchten, welche gegenüber der Gehäuseschale (14a; 14b; 14c) lageunveränderlich festgelegt ist,
**dadurch gekennzeichnet,**
**dass** die Bezugsachse (6-6) gegenüber der Zentralachse (7-7) geneigt ausgerichtet ist. (Fign.1-5)

2. Schraubverbindung nach Patentanspruch 1,
**dadurch gekennzeichnet,**
**dass** der Schraubenkopf (8a oder 8b oder 8c) im Montageendzustand einen größeren Abstand (9) zur Zentralachse (7-7) aufweist als das andere Ende (10) der Kopfschraube (11a oder 11b oder 11c). (Fign.1-5)

3. Schraubverbindung nach Patentanspruch 1 oder 2,
**dadurch gekennzeichnet,**
**dass** der Schraubenkopf (8a) im Montageendzustand in der von dem Koppelelement (13a) auf die Gehäuseschale (14a) weisenden Richtung der Zentralachse (7-7) gegenüber dem anderen Ende (10) der Kopfschraube (11a) versetzt liegt. (Fign.1-3)

4. Schraubverbindung nach einem der Patentansprüche 1 bis 3,
**dadurch gekennzeichnet,**
**dass** der das Innengewinde (16) aufweisende Verbindungsteil (17a) dem Koppelelement (13a) zugeordnet ist. (Fign.1-3)

5. Schraubverbindung nach Patentanspruch 4,
**dadurch gekennzeichnet,**
**dass** der das Innengewinde (16) aufweisende Verbindungsteil (17a) und das Koppelelement (13a) als ein einteiliges Blechpressteil ausgebildet sind. ( 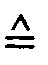 Fign.1-3)

6. Schraubverbindung nach Patentanspruch 4,
**dadurch gekennzeichnet,**
**dass** der das Innengewinde (16) aufweisende Verbindungsteil (17a) und das Koppelelement (13a) als gesonderte Bauteile ausgebildet sind. (Fign.1-3)

7. Schraubverbindung nach Patentanspruch 6,
**dadurch gekennzeichnet,**
**dass** der das Innengewinde (16) aufweisende Verbindungsteil (17a) an dem Koppelelement (13a) durch eine Schweißverbindung befestigt ist. ( 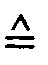 Fign.1-3)

8. Schraubverbindung nach Patentanspruch 6,
**dadurch gekennzeichnet,**
**dass** der das Innengewinde (16) aufweisende Verbindungsteil (17a) an dem Koppelelement (13a) durch eine Nietverbindung (19) befestigt ist. (Fign.1-3)

9. Schraubverbindung nach einem der Patentansprüche 6 bis 8,
**dadurch gekennzeichnet,**
**dass** der das Innengewinde (16) aufweisende Verbindungsteil (17a) nach Art einer Gewindemutter (20) ausgebildet ist. (Fign.1-3)

10. Schraubverbindung nach einem der Patentansprüche 6 bis 9,
**dadurch gekennzeichnet,**
**dass** der das Innengewinde (16) aufweisende Verbindungsteil (17a) und das Koppelelement (13a) in gegenseitige Anlage bringbare Anlageflächen (21,22) aufweisen, welche zur Bezugsachse (6-6) sowohl mittig angeordnet sind als auch quer verlaufen, und dass eine oder beide Anlageflächen (21 bzw. 22) ballig ausgebildet sind. (Fign. 1-3)

11. Schraubverbindung nach einem der Patentansprüche 1 bis 3,
**dadurch gekennzeichnet,**
**dass** der das Innengewinde (16) aufweisende Verbindungsteil (17b oder 17c) der Gehäuseschale (14b oder 14c) zugeordnet ist. (Fign.4 u.5)

12. Schraubverbindung nach Patentanspruch 11,
**dadurch gekennzeichnet,**
**dass** der Schraubenkopf (8b oder 8c) im Montageendzustand in der von der Gehäuseschale (14b oder 14c) auf das Koppelelement (13b oder 13c) weisenden Richtung der Zentralachse (7-7) gegenüber dem anderen Ende (10) der Kopfschraube (11b oder 11c) versetzt liegt. (Fign.4 u.5)

13. Schraubverbindung nach Patentanspruch 11 oder 12,
**dadurch gekennzeichnet,**
**dass** der das Innengewinde (16) aufweisende Verbindungsteil (17b oder 17c) und die Gehäuseschale (14b oder 14c) als gesonderte Bauteile ausgebildet sind. (Fign.4 u.5)

14. Schraubverbindung nach einem der Patentansprüche 11 bis 13,
**dadurch gekennzeichnet,**
**dass** der den Schraubendurchgang aufweisende Verbindungsteil (18b oder 18c) und das Koppelelement (13b oder 13c) einteilig ausgebildet sind. (Fign.4 u.5)

15. Schraubverbindung nach einem der Patentansprüche 11 bis 14,
**dadurch gekennzeichnet,**
**dass** der das Innengewinde (16) aufweisende Verbindungsteil (17b) durch wenigstens eine Schweißverbindung (23) an der Gehäuseschale (14b) befestigt ist. (Fig.4)

16. Schraubverbindung nach einem der Patentansprüche 1 bis 15,
**dadurch gekennzeichnet,**
**dass** das Koppelelement (13a oder 13b) in Form einer das zugeordnete Verbindungsteil (17a oder 18b) im Bereich ihres Außenumfanges aufweisenden Mitnehmerscheibe (24a oder 24b) und die Gehäuseschale (14a oder 14b) zusammen mit der Außenschale (25) eines Pumpenrades (26) als sogenannte Wandlerglocke eines hydrodynamischen Drehmomentwandlers (27) ausgebildet sind. (Fign.1-4)

17. Schraubverbindung nach einem der Patentansprüche 11 bis 14,
**dadurch gekennzeichnet,**
**dass** der das Innengewinde (16) aufweisende Verbindungsteil (17c) nach Art eines Einsatzes (28) ausgebildet und in eine korrespondierende Ausnehmung (29) der Gehäuseschale (14c) formschlüssig eingesetzt ist. (Fig.5)

18. Schraubverbindung nach einem der Patentansprüche 11 bis 14 und 17,
**dadurch gekennzeichnet,**
**dass** das Koppelelement (13c) ringförmig ausgebildet und an wenigstens einer gegenüber den Bezugsachsen (6-6) in Umfangsrichtung versetzt angeordneten Stelle (30) mit einem hydrodynamischen Drehmomentwandler (27) lösbar, jedoch drehfest verbunden ist. (Fig.5)

19. Schraubverbindung nach einem der Patentansprüche 11 bis 14, 17 u.18,
**dadurch gekennzeichnet,**
**dass** die Gehäuseschale (14c) als Bestandteil eines Rotors (53) einer elektrischen Maschine (Anlassmotor/Generator 58) ausgebildet und mit der Kurbelwelle eines Antriebsmotores (56) verbunden ist. (Fig.5)

20. Schraubverbindung nach einem der Patentansprüche 16 bis 19,
**dadurch gekennzeichnet,**
**dass** ihr mittlerer Abstand (61) zur Zentralachse (7-7) etwa gleich dem Außenradius des Drehmomentwandlers (27) ist.(Fig.5)

21. Schraubverbindung nach einem der Patentansprüche 18 bis 20,
**dadurch gekennzeichnet,**
**dass** der Abstand (62) der drehfesten Verbindung (30) zwischen dem Koppelelement (13c) und der Gehäuseschale (33) des Drehmomentwandlers (27) zur Zentralachse (7-7) etwa gleich dem Außenradius des Drehmomentwandlers (27) ist. (Fig.5)

## Claims

1. Screw connection between a torque-transmitting coupling element (13a; 13b; 13c) and a housing shell (14a; 14b; 14c) of an assembled component of a drive unit (36) of a motor vehicle, in which the coupling element and housing shell are rotationally symmetrical and rotatable, and are disposed with their central axis coaxial with a geometric central axis (7-7) of the drive unit (36), with a headed screw (11a; 11b; 11c) having an external thread (15), a connecting part (17a; 17b; 17c) incorporating a matching internal thread (16) and a connecting part (18a; 18b; 18c) with a screw orifice (40a) having a concentrically adjoining abutment surface (41a), and in which the one connecting part (17a; 18b; 18c) co-operates with the coupling element (13a; 13b; 13c) and the other connecting part (18a; 17b; 17c) co-operates with the housing shell (14a; 14b; 14c) to prevent respective movement, and in the final fitted state both the two connecting parts (17a, 18a; 17b, 17c) are clamped to one another by the screw head (8a; 8b; 8c) pressing directly on the abutment surface (41a) so as to be prevented from moving and the thread axes of the external and internal threads (15, 16) are oriented flush with a geometric reference axis (6-6), which is fixed so that its position relative to the housing shell (14a; 14b; 14c) does not change,
**characterised in that**
the reference axis (6-6) is oriented at an angle with respect to the central axis (7-7). (Figs. 1-5).

2. Screw connection as claimed in claim 1,
**characterised in that**
the screw head (8a or 8b or 8c) in the final fitted state is at a greater distance (9) from the central axis (7-7) than the other end (10) of the headed screw (11a or 11b or 11c). (Figs. 1-5).

3. Screw connection as claimed in claim 1 or 2,
**characterised in that**
in the final fitted state, the screw head (8a) lies offset from the other end (10) of the headed screw (11a) in the direction of the central axis (7-7) pointing away from the coupling element (13a) towards the housing shell (14a). (Figs. 1-3).

4. Screw connection as claimed in one of claims 1 to 3,
**characterised in that**
the connecting part (17a) incorporating the internal thread (16) co-operates with the coupling element (13a). (Figs. 1-3).

5. Screw connection as claimed in claim 4,
**characterised in that**
the connecting part (17a) incorporating the internal thread (16) and the coupling element (13a) are an integral part made from pressed sheet metal. ( 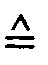 Figs. 1-3).

6. Screw connection as claimed in claim 4,
**characterised in that**
the connecting part (17a) incorporating the internal thread (16) and the coupling element (13a) are separate components. (Figs. 1-3).

7. Screw connection as claimed in claim 6,
**characterised in that**
the connecting part (17a) incorporating the internal thread (16) is fixed to the coupling element (13a) by a welded joint. (=Figs. 1-3).

8. Screw connection as claimed in claim 6,
**characterised in that**
the connecting part (17a) incorporating the internal thread (16) is fixed to the coupling element (13a) by means of a rivet joint (19). (Figs. 1-3).

9. Screw connection as claimed in one of claims 6 to 8,
**characterised in that**
the connecting part (17a) incorporating the internal thread (16) is provided in the form of a threaded nut (20). (Figs. 1-3).

10. Screw connection as claimed in one of claims 6 to 9,
**characterised in that**
the connecting part (17a) incorporating the internal thread (16) and the coupling element (13a) have abutment surfaces (21, 22) which can be placed in mutual abutment, which are disposed both centrally with respect to the reference axis (6-6) and extend transversely, and one or both abutment surfaces (21 respectively 22) is or are of a spherical design. (Figs. 1-3).

11. Screw connection as claimed in one of claims 1 to 3,
**characterised in that**
the connecting part (17b or 17c) incorporating the internal thread (16) co-operates with the housing shell (14b or 14c). (Figs. 4 and 5).

12. Screw connection as claimed in claim 11,
**characterised in that**
in the final fitted state, the screw head (8b or 8c) lies offset from the other end (10) of the headed screw (11b or 11c) in the direction of the central axis (7-7) pointing away from the housing shell (14b or 14c) towards the coupling element (13b or 13c). (Figs. 4 and 5).

13. Screw connection as claimed in claim 11 or 12,
**characterised in that**
the connecting part (17b or 17c) incorporating the internal thread (16) and the housing shell (14b or 14c) are separate components. (Figs. 4 and 5).

14. Screw connection as claimed in one of claims 11 to 13,
**characterised in that**
the connecting part (18b or 18c) having the screw orifice and the coupling element (13b or 13c) are integral. (Figs. 4 and 5).

15. Screw connection as claimed in one of claims 11 to 14,
**characterised in that**
the connecting part (17b) incorporating the internal thread (16) is fixed to the housing shell (14b) by a welded joint (23). (Fig. 4).

16. Screw connection as claimed in one of claims 1 to 15,
**characterised in that**
the coupling element (13a or 13b) is provided in the form of a driver plate (24a or 24b) and co-operates in the region of its outer periphery with the connecting part (17a or 18b), and the housing shell (14a or 14b) in conjunction with the external shell (25) of an impeller (26) is designed as a so-called converter housing of a hydrodynamic torque converter (27). (Figs. 1-4).

17. Screw connection as claimed in one of claims 11 to 14,
**characterised in that**
the connecting part (17c) incorporating the internal thread (16) is provided in the form of an insert (28) and is inserted in a positive fit in a matching recess (29) of the housing shell (14c). (Fig. 5).

18. Screw connection as claimed in one of claims 11 to 14 and 17,
**characterised in that**
the coupling element (13c) is of an annular shape and is connected releasably but rotationally fixed to a hydrodynamic torque converter (27) at least at one point (30) that is offset from the reference axes (6-6) in the circumferential direction. (Fig. 5).

19. Screw connection as claimed in one of claims 11 to 14, 17 and 18,
**characterised in that**
the housing shell (14c) is provided as part of a rotor (53) of an electric motor (starter motor/generator 58) and is linked to the crankshaft of a drive motor (56). (Fig. 5).

20. Screw connection as claimed in one of claims 16 to 19,
**characterised in that**
its mean distance (61) from the central axis (7-7) is more or less the same as the external radius of the torque converter (27). (Fig. 5).

21. Screw connection as claimed in one of claims 18 to 20,
**characterised in that**
the distance (62) from the central axis (7-7) of the rotationally fixed connection (30) between the coupling element (13c) and the housing shell (33) of the torque converter (27) is more or less the same as the external radius of the torque converter (27). (Fig. 5).

## Revendications

1. Assemblage vissé entre un élément de couplage (13a; 13b; 13c) transmettant un couple, et une coque (14a; 14b; 14c) du carter d'un composant d'une unité d'entraînement (36) d'un véhicule, dans lequel l'élément de couplage et la coque de carter sont agencés avec une symétrie de révolution et sont disposés de manière à pouvoir tourner avec leur axe médian coaxial à un axe géométrique central (7-7) de l'unité d'entraînement (136), et comportant un boulon de tête (11a; 11b; 11c) possédant un filetage extérieur (15), une partie d'assemblage (17a; 17b; 17c) possédant un taraudage correspondant (16), et un passage de vis (40a) avec une surface d'application (410) se raccordant concentriquement, et dans lequel une partie d'assemblage (17a; 18b; 18c) est associée d'une manière respectivement bloquée contre tout déplacement à l'élément de couplage (13a; 13b; 13c) et l'autre partie d'assemblage (18a; 17b; 17c) étant associée d'une manière respectivement bloquée contre tout déplacement à la coque (14a; 14b; 14c) du carter, et à l'état de montage final, les deux parties d'assemblage (17a, 18a; 17b, 17c) sont serrées l'une contre l'autre, d'une manière bloquée contre tout déplacement, sous l'action du serrage de la tête de boulon (8a; 8b: 8c) directement ou indirectement contre la surface d'application (41a), et également les axes du filetage extérieur et du taraudage (15, 16) sont alignés avec un axe de référence géométrique (6=6), qui est fixé d'une manière immobile en position, par rapport à la coque (14a; 14b; 14c) du carter,
**caractérisé en ce que** l'axe de référence (6-6) est orienté en étant incliné par rapport à l'axe central (7-7). (Figures 1-5).

2. Assemblage vissé selon la revendication 1,
**caractérisé en ce que** dans l'état de montage final, la tête de boulon (8a ou 8b ou 8c) est située à une distance plus importante (9) de l'axe central (7-7) que ne l'est l'autre extrémité (10) du boulon à tête (11a ou 11b ou 11c). (Figures 1-5).

3. Assemblage vissé selon la revendication 1 ou 2, **caractérisé en ce qu'**à l'état final monté, la tête de boulon (8a) est décalée, dans la direction de l'axe central (7-7) tournée de l'élément de couplage (23a) vers la coque (14a) du carter par rapport à l'autre extrémité (10) de la tête de boulon (11a). (Figures 1-3).

4. Assemblage vissé selon l'une des revendications 1 à 3, **caractérisé en ce que** la partie d'assemblage (17a), qui possède le taraudage (16), est associé à l'élément de couplage (13a). (Figures 1-3).

5. Assemblage vissé selon la revendication 4,
**caractérisé en ce que** la partie de liaison (17a), qui possède le taraudage (16), et l'élément de couplage (13a) sont agencés sous la forme d'une pièce en tôle pressée monobloc. ( 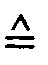 figures 1-3).

6. Assemblage vissé selon la revendication 4,
**caractérisé en ce que** la partie d'assemblage (17a), qui possède le taraudage (16), et l'élément de couplage (13a) sont agencés sous la forme de composants séparés. (Figures 1*-*3).

7. Assemblage vissé selon la revendication 2,
**caractérisé en ce que** la partie d'assemblage (17a), qui possède le taraudage (16), est fixé sur l'élément de couplage (13a) au moyen d'une liaison soudée ( 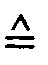 figures 1a 3).

8. Assemblage vissé selon la revendication 6,
**caractérisé en ce que** la partie d'assemblage (17a), qui comporte le taraudage (16), est fixée sur l'élément de couplage (13a) au moyen d'une liaison rivetée. (Figures 1-3).

9. Assemblage vissé selon l'une des revendications 6 à 8, **caractérisé en ce que** la partie d'assemblage (17a), qui possède le taraudage (16), est agencée à la manière d'un écrou (20). (Figures 1-3).

10. Assemblage vissé selon l'une des revendications 6 à 9, **caractérisé en ce que** la partie d'assemblage (17a), qui possède le taraudage (16) et l'élément de couplage (13a) possèdent des surfaces d'application (21, 22) pouvant être appliquées l'une contre l'autre et qui à la fois sont disposées d'une manière centrée et s'étendent également transversalement par rapport à l'axe de référence (6-6) et qu'une ou les deux surfaces d'application (21 ou 22) sont agencées avec une forme bombée (figures 1-3).

11. Assemblage vissé selon l'une des revendications 1 à 3, **caractérisé en ce que** la partie d'assemblage (17b ou 17c), qui comporte le taraudage (16), est associée à la coque (14b ou 14c) du carter. (Figures 4 et 5).

12. Assemblage vissé selon la revendication 11,
**caractérisé en ce qu'**à l'état final monté, la tête de boulon (8b ou 8c) est décalée, dans la direction de l'axe central (7-7) tournée la coque (14b ou 14c) du carter en direction de l'élément de couplage (13b ou 13c), par rapport à l'autre extrémité (10) du boulon à tête (11b ou 11c). (Figures 4 et 5).

13. Assemblage vissé selon la revendication 11 ou 12, **caractérisé en ce que** la partie d'assemblage (17b ou 17c), qui possède le taraudage (16), et la coque (14b ou 14c) du carter sont agencées sous la forme de composants séparés. (Figures 4 et 5).

14. Assemblage vissé selon l'une des revendications 11 à 13, **caractérisé en ce que** la partie d'assemblage (18b ou 18c), qui possède le passage de vis, et l'élément de couplage (13b ou 13c) sont réalisés d'un seul tenant. (Figures 4 et 5).

15. Assemblage vissé selon l'une des revendications 11 à 14, **caractérisé en ce que** la partie d'assemblage (17b), qui possède le taraudage (16), est fixé par au moins une liaison soudée (23) sur la coque (14b) du carter. (Figure 4).

16. Assemblage vissé selon l'une des revendications 1 à 15, **caractérisé en ce que** l'élément de couplage (13a ou 13b) est agencé sous la forme d'un disque d'entraînement (24a ou 24b), qui possède la partie d'assemblage associée (17a ou 17b) dans la zone de sa périphérie extérieure, et la coque (14a ou 14b) du carter est agencée, conjointement avec la coque extérieure (25) d'un rotor de pompe (26) sous la forme de ce qu'on appelle une cloche d'un convertisseur hydrodynamique de coupe (27). (Figures 1-4).

17. Assemblage vissé selon l'une des revendications 11 à 14, **caractérisé en ce que** la partie d'assemblage (17), qui comporte le taraudage (16), est agencée à la manière d'un insert (28) et est inséré selon une liaison par formes complémentaires dans un évidement correspondant (29) de la coque (14c) du carter. (Figure 5).

18. Assemblage vissé selon l'une des revendications 11 et 14 à 17, **caractérisé en ce que** l'élément de couplage (13c) est agencé avec une forme annulaire et est relié de façon amovible, mais en étant bloqué en rotation, en au moins un emplacement (30), disposé d'une manière décalée par rapport aux axes de référence (6=6) dans la direction périphérique, à un convertisseur hydrodynamique de couple (27). (Figure 5).

19. Assemblage vissé selon l'une des revendications 11 à 14, 17 et 18, **caractérisé en ce que** la coque (14c) du carter est agencée sous la forme d'un constituant d'un rotor (53) d'une machine électrique (moteur de démarrage / générateur (58) et est reliée au vilebrequin d'un moteur d'entraînement (56). (Figure 5).

20. Assemblage vissé selon l'une des revendications 13 à 19, **caractérisé en ce que** sa distance médiane (61) par rapport à l'axe central (7-7) est approximativement égale au rayon extérieur du convertisseur de couple (37). (Figure 5).

21. Assemblage vissé selon l'une des revendications 18 à 20, **caractérisé en ce que** la distance (62) de la liaison solidaire en rotation (30) entre l'élément de couplage (13c) et la coque (33) du carter du convertisseur de couple (27) par rapport à l'axe central (7-7) est approximativement égale au rayon extérieur du convertisseur de couple (27). (Figure 5).
